# EUROPÄISCHE PATENTSCHRIFT

(11) **EP 2 209 828 B1**
(45) Veröffentlichungstag und Bekanntmachung des Hinweises auf die Patenterteilung: **03.08.2011**
(21) Anmeldenummer: 08849215.2
(22) Anmeldetag: 31.10.2008
(51) Int. Cl.: C08G 18/28, C08G 18/08

(54) **NICHT-IONISCH HYDROPHILIERTE BINDEMITTEL-DISPERSIONEN**
NON-IONIC HYDROPHILIZED BINDER DISPERSIONS
DISPERSIONS LIANTES HYDROPHILES NON IONIQUES

(30) Priorität: 13.11.2007 DE 102007054002
(43) Veröffentlichungstag der Anmeldung: 28.07.2010
(73) Patentinhaber: Bayer MaterialScience AG, 51368 Leverkusen (DE)
(72) Erfinder: GRABLOWITZ, Hans, Georg, 41562 Neuss (DE); RISCHE, Thorsten, Colombus, Georgia, 31909 (US); FELLER, Thomas, 42659 Solingen (DE); MEIXNER, Jürgen, 47803 Krefeld (DE); NAUJOKS, Karin, 51519 Odenthal (DE); CASSELMANN, Holger, 51519 Odenthal (DE)
(86) Internationale Anmeldenummer: PCT/EP2008/009195
(87) Internationale Veröffentlichungsnummer: WO 2009/062603

(56) Entgegenhaltungen:
- EP-A- 0 792 900
- EP-A- 1 283 230

## Beschreibung

Die vorliegende Erfindung betrifft wässrige nicht-ionisch hydrophilierte Bindemittel-Dispersionen auf Basis von Polyurethanharnstoffen mit terminalen Polyethylenoxid-Gruppen, deren Herstellung und Verwendung zur Herstellung von Beschichtungen.

Beschichtungsmittel die auf Polyurethanen basieren, spielen aufgrund ihrer herausragenden Eigenschaften, wie z.B. hohe Kratzfestigkeit und Kälteflexibilität, eine große Rolle. Aufgrund von steigenden ökologischen und anderen gesetzlichen Bestimmungen kommt dabei den lösemittelfreien, wässrigen Polyurethanen eine besondere Bedeutung zu. Beschichtungen, die auf Polyurethan-Dispersionen basieren kommen in unterschiedlichen Anwendungen, wie z.B. der Textilbeschichtung, Kunststoff- und Automobillackierung, zum Einsatz. Für bestimmte Anwendungen wie z.B. in der Elektronik ist es notwendig, dass Beschichtungen eine möglichst geringe Leitfähigkeit aufweisen, um eine hohe elektrische Isolierung zu gewährleisten. Gleichzeitig ist es wünschenswert, dass die wässrigen Beschichtungsmittel in einem breiten Temperaturintervall gegenüber Koagulation stabil sind, um sie in den unterschiedlichen Verfahren wie z.B. Sprühen oder Rakeln bei möglichst variablen Bedingungen applizieren zu können.

Die Stabilisierung der Polyurethan-Partikel in einer wässrigen Phase kann durch zwei Mechanismen erfolgen, indem entweder Ladungen an der Oberfläche zur Abstoßung der Partikel führen (ionische Stabilisierung) oder indem an der Oberfläche adsorbierte oder kovalent gebundene, wasserlösliche oder zum Teil wasserlösliche Oligomer- oder Polymerketten durch Van-der-Waals-Wechselwirkungen einer Agglomeration vorbeugen (nicht-ionische Stabilisierung). Die ionische Stabilisierung derartiger Dispersionen führt zu Systemen, die gegenüber einer Temperaturerhöhung relativ koagulations-unempfindlich sind, aber durch das Vorhandensein von Ionen eine erhöhte Leitfähigkeit zeigen. Bei der nicht-ionischen Stabilisierung verhält es sich umgekehrt, d.h. diese Systeme können durch Temperaturen größer 60 °C destabilisiert werden, wie beispielsweise in der DE-A 26,51,506 beschrieben. Diese zeigen jedoch den Nachteil einer vergleichsweise niedrigen Leitfähigkeit. Es ist außerdem hinreichend bekannt beide Stabilisierungsmechanismen zu kombinieren um ionisch/nicht-ionisch stabilisierte Dispersionen zu erhalten, die in einem relativ breiten Temperaturbereich koagulationsstabil sind, wobei diese Systeme ebenfalls aufgrund von Ladungen eine höhere Leitfähigkeit aufweisen.

Die nicht-ionische Stabilisierung beruht auf den Einbau von funktionellen, gegenüber Isocyanatgruppen reaktiven hydrophilen Polyethylenoxiden (im Folgenden als PEG abgekürzt), wobei das PEG in der Polyurethan-Hauptkette linear, seitenständig oder terminal eingebaut werden kann.

In der US-A 3,905,929 werden nicht-ionische Polyurethandispersionen beschrieben, bei denen PEG-Ketten seitenständig in der Polyurethan-Dispersion angebracht sind. Die resultierenden Bindemittel zeichnen sich durch verhältnismäßig gute mechanische Eigenschaften aus. Die PEG-Gruppen sind aber somit nicht terminal verankert und es können Nebenprodukte während des Prozesses entstehen.

In der EP-A 0 317 258 werden difunktionelle, nichtionische PEG-haltige Emulgatoren offenbart, die zum Aufbau einer Polyurethan-Dispersion eingesetzt werden können. Die dort beschriebenen PEG-haltigen Hydrophilierungsmittel werden ebenfalls bifunktionell seitenständig eingebaut. Die so hergestellten Polyurethan-Dispersionen zeichnen sich zwar durch eine verhältnismäßig hohe thermische Stabilität aus, allerdings müssen die Hydrophilierungsmittel in einem weiteren Prozessschritt erzeugt werden, was unter ökonomischen Gesichtspunkten einen Nachteil darstellt.

EP-A 0 792 900 beschreibt Polyurethandispersionen zur Verwendung in Glasfaserschlichten. Diese können ionisch und/oder nicht-ionisch hydrophiliert sein, wobei das Polyisocyanat mindestens zu 50% aus 1-Methyl-2,4- und/oder 2,6-diisocyanatocyclohexan besteht. In den dort genannten Dispersionen werden Mengen von ≤ 15 Gew% einer nicht-ionischen terminalen Hydrophilierungskomponente eingesetzt.

In der US-A 5,066,732 werden nicht-ionische Polyurethandispersionen beschrieben, wobei eine monofunktionelle Polyethylenglykol-Komponente mit einem Diisocyanat intermediär umgesetzt wird und das Reaktionsprodukt anschließend mit einem Dihydroxyamin zu einer Hydrophilierungskomponente zur Reaktion gebracht wird. Dementsprechend ist das Polyethylenoxid ebenfalls seitenständig im Polyurethan verankert.

Die aus dem Stand der Technik bekannten Polyurethandispersionen zeigen jedoch alle eine unzureichende Lagerstabilität, insbesondere bei erhöhten Temperaturen und neigen daher vorzeitig dazu zu koagulieren.

Aufgabe der vorliegenden Erfindung bestand somit in der Bereitstellung von neuen wässrigen Polyurethandispersionen, die eine Koagulationstempeartur von mindestens 75 °C aufweisen und somit über eine ausreichende Lagerstabilität verfügen.

Die Aufgabe wurde anspruchsgemäß gelöst. Dabei werden Polyurethanharnstoff-Dispersionen beansprucht, die im Polymergerüst monofunktionelle PEG-haltige Komponenten einer bestimmten Molmasse und in einem bestimmten Gewichtsverhältnis terminal an der Polyurethankette aufweisen.

Gegenstand der vorliegenden Erfindung sind wässrige Polyurethanharnstoff-Dispersionen enthaltend die Aufbaukomponenten
A) 10 bis 40 Gew.-%, bevorzugt 15 bis 40 Gew.-%, besonders bevorzugt 20 bis 35 Gew.-% einer oder mehrerer aliphatischer Polyisocyanatverbindungen,
B) 40 bis 70 Gew.%, bevorzugt 42 bis 63 Gew.-% besonders bevorzugt 44 bis 57 Gew.-% mindestens einer Polyhydroxyverbindung einer Molmasse Mₙ von 400 bis 8000 g/mol,
C) 19 bis 50 Gew.%, bevorzugt 19 bis 30 Gew.% und besonders bevorzugt 19 bis 25 Gew.-% einer gegenüber Isocyanatgruppen reaktiven, monofunktionellen Polyethylenglykol-haltigen Komponente, deren Anteil an Polyethylenglykol mindestens 50 Gew.-%, bevorzugt 70 Gew.-% und besonders bevorzugt 80 Gew.% beträgt und eine Molmasse Mₙ von 1200 g/mol bis 3000 g/mol, bevorzugt 1500 g/mol bis 3000 g/mol und besonders bevorzugt von 2000 g/mol bis 3000 g/mol aufweist,
D) 0,5 bis 10 Gew.%, bevorzugt 1 bis 7 Gew.%, besonders bevorzugt 2 bis 5 Gew.% mindestens einer Polyaminverbindung einer Molmasse Mₙ von 32 bis 400 g/mol und einer Funktionalität ≥ 1,
E) 0,5 bis 10 Gew.%, bevorzugt 1 bis 7 Gew.%, besonders bevorzugt 1,5 bis 5 Gew.-% einer Polyhydroxyverbindung einer Molmasse Mₙ von 62 bis 320 g/mol und einer Funktionalität ≥ 1 sowie
F) gegebenenfalls 0 bis 10 Gew.%, bevorzugt 0,5 bis 7 Gew.%, besonders bevorzugt 0,5 bis 5 Gew.% weiterer Hilfs- und Zusatzstoffe,
wobei die Summe der Aufbaukomponenten von A) bis F) immer 100 Gew.% ergibt.

Geeignete Polyisocyanate der Komponente A) sind die dem Fachmann an sich bekannten aromatischen, araliphatischen, aliphatischen oder cycloaliphatischen Polyisocyanate. Geeignete Polyisocyanate sind z.B. 1,4-Butylendiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendüsocyanat, 1,4-Phenylendiisocyanat, 2,4- und/oder 2,6-Toluylendiisocyanat, 1,5-Naphthylendiisocyanat, 2,4'- oder 4,4'-Diphenylmethan-diisocyanat, 1,3- und 1,4-Bis-(2-isocyanato-prop-2-yl)-benzol (TMXDI), 1,3-Bis(isocyanato-methyl)benzol (XDI), (S)-Alkyl-2,6-diisocyanato-hexanoate oder (L)-Alkyl-2,6-diisocyanatohexanoate.

Anteilig können auch Polyisocyanate mit einer Funktionalität ≥ 2 verwendet werden. Hierzu gehören modifizierte Diisocyanate mit Uretdion-, Isocyanurat-, Urethan-, Allophanat-, Biuret-, Iminooxadiazindion- und/oder Oxadiazintrionstruktur sowie nicht-modifizierte Polyisocyanate mit mehr als 2 NCO-Gruppen pro Molekül z.B. 4-Isocyanatomethyl-1,8-octandiisocyanat (Nonantriisocyanat) oder Triphenylmethan-4,4',4''-triisocyanat.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen mit einer mittleren Funktionalität von 2 bis 4, bevorzugt 2 bis 2,6 und besonders bevorzugt 2 bis 2,4.

Besonders bevorzugt sind Isophorondiisocyanat, die Isomeren des Bis-(4,4'-isocyanatocyclohexyl)methan sowie deren Mischungen.

Als Verbindungen B) einsetzbare polymere Polyole weisen ein Molekulargewicht Mₙ von 400 bis 8000 g/mol, bevorzugt von 400 bis 6000 g/mol und besonders bevorzugt von 400 bis 3000 g/mol auf. Ihre Hydroxylzahl beträgt 22 bis 400 mg KOH/g, bevorzugt 30 bis 300 mg KOH/g und besonders bevorzugt 40 bis 250 mg KOH/g und weisen eine OH-Funktionalität von 1,5 bis 6, bevorzugt von 1,8 bis 3 und besonders bevorzugt von 1,9 bis 2,1 auf.

Polyole im Sinne der vorliegenden Erfindung sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/- Formaldehydharze, allein oder in Mischungen. Bevorzugt sind Polyesterpolyole, Polyetherpolyole oder Polycarbonatpolyole, besonders bevorzugt sind Polyesterpolyole.

Als Polyetherpolyole seien z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Geeignete hydroxyfunktionelle Polyether B) weisen OH-Funktionalitäten von 1,8 bis 6,0, bevorzugt 2,0 bis 4,0, OH-Zahlen von 50 bis 700, bevorzugt von 100 bis 600 mg KOH/g Feststoff und Molekulargewichte Mₙ von 106 bis 4 000 g/mol, bevorzugt von 200 bis 3500 auf, wie z.B. Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt als Polyetherkomponente B) sind Polypropylenoxidpolyole mit einem Molekulargewicht von 300 bis 4000 g/mol. Hierbei können die besonders niedermolekularen Polyetherpolyole bei entsprechend hohen OH-Gehalten wasserlöslich sein. Besonders bevorzugt sind jedoch wasserunlösliche Polypropylenoxidpolyole und Polytetramethylenoxidpolyole sowie deren Mischungen.

Gut geeignete Beispiele für Polyesterpolyole sind die an die bekannten Polykondensate aus Disowie gegebenenfalls Tri,- und Tetraolen und Di- sowie gegebenenfalls Tri- und Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbindungen bevorzugt sind. Als gegebenenfalls mit einzusetzende Polyole sind hier beispielsweise Trimethylolpronan, Glycerin, Erythrit, Trimethylolbenzol oder Trishydroxyethylisocyanurat zu nennen.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbemsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Brauchbare Lactone sind u.a. Caprolacton, Butyrolacton und Homologe.

Bevorzugt sind Polyesterpolyole B) auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole B) auf Basis von Butandiol und/oder Neopentylglykol und/oder Hexandiol mit Adipinsäure und/oder Phthalsäure.

Die in Frage kommenden Polycarbonatpolyole sind durch Reaktion von Kohelnsäurederivaten, z.B. Diphenylcarbonat, Dimethylcarbonat oder Phosgen mit Diolen erhältlich. Als derartige Diole kommen z.B. Ethylenglykol, 1,2 und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di-oder Trihexylenglykol erhalten werden. Auch Polyether-Polycarbonatpolyole können eingesetzt werden.

Bevorzugt sind Polycarbonatpolyole B) auf Basis von Dimethylcarbonat und Hexandiol und/oder Butandiol und/oder Caprolacton. Ganz besonders bevorzugt sind Polycarbonatpolyole B) auf Basis von Dimethylcarbonat und Hexandiol und/oder Caprolacton.

Geeignete nicht-ionisch hydrophilierende, monofunktionelle Verbindungen entsprechend der Definition der Komponente C) sind z.B. Polyoxyalkylenether, die nur eine Hydroxy- oder Aminogruppe enthalten. Diese Polyether enthalten einen Anteil von 50 Gew.-% bis 100 Gew.-% an Bausteinen, die vom Ethylenoxid abgeleitet sind, bevorzugt 70 Gew.-% bis 100 Gew-% und besonders bevorzugt 80 Gew.-% bis 100 Gew.-% wie sie in an sich bekannter Weise durch Alkoxylierung der unter B) genannten Startermoleküle zugänglich sind. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Die Molmasse Mₙ dieser Bausteine beträgt 1200 g/mol bis 3000 g/mol, bevorzugt 1500 g/mol bis 3000 g/mol und besonders bevorzugt 2000 g/mol bis 3000 g/mol.

Geeignete derartige nichtionisch hydrophilierende, monfunktionelle Verbindungen sind beispielsweise monofunktionelle Alkoxypolyethylenglycole wie z.B. Methoxypolyethylenglykole (MPEG Carbowax^{®} 2000 oder Methoxy PEG-40, Molgewichtsbereich 1800 bis 2200, The Dow Chemical Company), monofunktionelle Polyethermonoalkylether wie z.B. LB 25 aufgebaut aus Butanol und Ethylenoxid sowie Propylenoxid, mit einer mittleren Molmasse Mₙ von 2250 g/mol von Bayer Material Science, monofunktionelle Polyetheramine (Jeffamine^{®} M 1000, PO/EO mol-Verhältnis 3/19 und M 2070, PO/EO mol-Verhältnis 10/31, Huntsman Corp.).

Bevorzugt werden als C) MPEG Carbowax^{®} 2000, LB 25 oder Jeffamine^{®} M 2070 eingesetzt. Besonders bevorzugt sind MPEG Carbowax^{®} 2000 oder LB 25.

Die zur Kettenverlängerung eingesetzten Polyamine D) sind Di- oder Polyamine sowie Hydrazide, z.B. Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin oder Adipinsäuredihydrazid.

Als D) kommen prinzipiell auch Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen oder neben einer Aminogruppe (primär oder sekundär) auch OH-Gruppen aufweisen. Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1-methylaminobutan, weiterhin Alkanolamine wie N-Aminoethylethanolamin, Ethanolamin, 3-Aminopropanol oder Neopentanolamin. Bevorzugt sind Diethanolamin und/oder Hydrazin und/oder Isophorondiamin (IPDA) und/oder Ethylendiamin. Besonders bevorzugt sind Hydrazin und/oder Isophorondiamin und/oder Ethylendiamin. Ganz besonders bevorzugt ist eine Mischung aus Hydrazinhydrat und IPDA.

Die zum Aufbau der Polyurethanharze eingesetzten niedermolekularen Polyole E) bewirken in der Regel eine Versteifung und oder eine Verzweigung der Polymerkette. Das Molekulargewicht liegt bevorzugt zwischen 62 und 200. Geeignete Polyole können aliphatische, alicyclische oder aromatische Gruppen enthalten. Genannt seien hier beispielsweise die niedermolekularen Polyole mit bis zu etwa 20 Kohlenstoffatomen je Molekül, wie z.B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinondihydroxyethylether, Bisphenol A (2,2-Bis(4-hydroxyphenyl)propan), hydriertes Bisphenol A (2,2-Bis(4-hydroxycyclohexyl)propan) sowie deren Mischungen, sowie Trimethylolpropan, Glycerin oder Pentaerythrit. Auch Esterdiole wie z.B. δ-Hydroxybutyl-ε-hydroxy-capronsäureester, ω-Hydroxyhexyl-γ-hydroxybuttersäureester, Adipinsäure-(β-hydroxyethyl)ester oder Terephthalsäure-bis(β-hydroxyethyl)-ester können verwendet werden. Bevorzugt wird Hexandiol und/oder Trimethylolpropan und/oder Butandiol. Besonders bevozugt sind Trimethylolpropan und/oder Butandiol.

Gegebenenfalls können weitere Hilfs- oder Zusatzstoffe F) mit eingesetzt werden, indem diese im Anschluss an die Herstellung der wässrigen Polyurethandisperion in der wässrigen, kontinuierlichen Phase gelöst werden oder durch gelöst in der organischen Phase vor der Dispergierung zugesetzt werden und damit codispergiert werden. Geeignete Hilfs- oder Zusatzstoffe sind z.B. Antioxidationsmittel, UV-Stabilisatoren, Verlaufsmittel, Biozide, Antistatika oder Haftvermittler.

Zur Herstellung der erfindungsgemäßen PUR-Dispersionen können alle aus dem Stand der Technik bekannten Verfahren wie z.B. Prepolymer-Mischverfahren, Acetonverfahren oder Schmelzdipergierverfahren verwendet werden. Bevorzugt wird die PUR-Dispersion nach dem Aceton-Verfahren hergestellt.

Für die Herstellung der PUR-Dispersion nach dem Aceton-Verfahren werden üblicherweise die Bestandteile A), B), C), E) und gegebenenfalls F), die keine primären oder sekundären Aminogruppen aufweisen dürfen und die Polyisocyanatkomponente A) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden. Bevorzugt ist Dibutylzinndilaurat.

Geeignete Lösungsmittel sind die üblichen aliphatischen, ketofunktionellen Lösemittel wie z.B. Aceton, Butanon, die nicht nur zu Beginn der Herstellung, sondern gegebenenfalls in Teilen auch später zugegeben werden können. Bevorzugt sind Aceton und Butanon.

Anschließend werden die gegebenenfalls zu Beginn der Reaktion noch nicht zugegebenen Bestandteile von A) - F) zudosiert.

Bei der Herstellung des Polyurethan-Prepolymeren beträgt das Stoffmengenverhältnis von Isocyanatgruppen zu mit Isocyanat reaktiven Gruppen 1,0 bis 3,5, bevorzugt 1,1 bis 3,0, besonders bevorzugt 1,1 bis 2,5.

Die Umsetzung der Komponenten A), B), C) und E) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Im Anschluss wird in einem weiteren Verfahrensschritt, falls noch nicht oder nur teilweise geschehen das erhaltene Prepolymer mit Hilfe von aliphatischen Ketonen wie Aceton oder Butanon gelöst.

Anschließend werden mögliche NH₂- und/oder NH-funktionelle Komponenten mit den noch verbliebenen Isocyanatgruppen umgesetzt. Diese Kettenverlängerung/-terminierung kann dabei entweder in Lösungsmittel vor dem Dispergieren, während des Dispergierens oder in Wasser nach dem Dispergieren durchgeführt werden. Bevorzugt wird die Kettenverlängerung vor der Dispergierung in Wasser durchgeführt.

Werden zur Kettenverlängerung Verbindungen entsprechend der Definition von D) mit NH₂- oder NH-Gruppen eingesetzt, erfolgt die Kettenverlängerung der Prepolymere bevorzugt vor der Dispergierung.

Der Kettenverlängerungsgrad, also das Äquivalentverhältnis von NCO-reaktiven Gruppen der zur Kettenverlängerung eingesetzten Verbindungen zu freien NCO-Gruppen des Prepolymers liegt zwischen 40 bis 100 %, bevorzugt zwischen 60 bis 100 %, besonders bevorzugt zwischen 70 und 100 %.

Die aminischen Komponenten D) können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mit verwendet werden so beträgt der Verdünnungsmittelgehalt bevorzugt 70 bis 95 Gew.-%.

Die Herstellung der PUR-Dispersion aus den Prepolymeren erfolgt im Anschluss an die Kettenverlängerung. Dazu wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den Prepolymerlösungen gerührt. Bevorzugt wird das Wasser in das gelöste Prepolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Der Feststoffgehalt der erfindungsgemäßen Polyurethanpolyharnstoff-Dispersion liegt zwischen 20 bis 70 Gew.%, bevorzugt 30 bis 65 Gew.% und besonders bevorzugt zwischen 35 bis 62 Gew.-%.

Weiterer Gegenstand der Erfindung ist die Verwendung der erfindungsgemäßen Polyurethanpolyharnstoff-Dispersionen zur Herstellung von Beschichtungsmitteln, bevorzugt zur Herstellung von Glasfaserschlichten.

Geeignete Substrate sind z.B. Kunststoffe, Metalle, und Glas. Die erfindungsgemäßen Polyurethanpolyharnstoff-Dispersionen können ebenfalls in Kombination mit vernetzenden, wässrigen, blockierten Polyisocyanaten eingesetzt werden und zu Glasfaserschlichten verarbeitet werden. Ebenfalls Gegenstand der vorliegenden Erfindung sind wässrige Beschichtungsmittel enthaltend die erfindungsgemäße Polyurethanpolyharnstoff-Dispersion sowie ein Vernetzer ausgewählt aus der Gruppe der wasserdispergierbaren oder wasserlöslichen blockierten Polyisocyanate.

Als Vernetzer werden blockierte Polyisocyanate verwendet, die gegebenenfalls in wasserdispergierbarer bzw. wasserlöslicher Form vorliegen oder als wässrige Dispersion bzw. Lösung eingesetzt werden. Die blockierten Polyisocyanate weisen eine (mittlere) NCO-Funktionalität von 2,0 bis 5,0, bevorzugt von 2,3 bis 4,5, einen Gehalt an Isocyanatgruppen (unblockiert und blockiert) von 5,0 bis 27,0 Gew.-%, bevorzugt von 14,0 bis 24,0 Gew.-% und einen Gehalt an monomeren Diisocyanaten von weniger als 1 Gew.%, bevorzugt weniger als 0,5 Gew.-% auf. Die Isocyanatgruppen der Polyisocyanate der wasserdispergierbaren bzw. wasserlöslichen blockierten Polyisocyanate liegen zu mindestens 50 %, bevorzugt zu mindestens 60 % und besonders bevorzugt zu mindestens 70 % in blockierter Form vor. Die Herstellung der wasserdispergierbaren, blockierten Polyisocyanate II) kann nach bekannten Methoden des Standes der Technik (z.B. in der DE-A 2 456 469, Spalte 7-8, Beispiel 1-5 und DE-A 2 853 937 S. 21-26, Beispiel 1-9) erfolgen.

Die erfindungsgemäßen wässrigen Beschichtungsmittel können als weitere Komponente Hilfs- und Zusatzstoffe enthalten. Dies können Haftvermittler, Gleitmittel, Antistatika aber auch die dem Fachmann an sich gut bekannten Lackadditive wie Farbstoffe, Pigmente, Verlaufshilfsmittel, Licht- und Alterungsschutzmittel sowie UV-Absorber sein.

Als Haftvermittler können die bekannten Silan-Haftvermittler wie 3-Aminopropyltrimethoxy- bzw. -triethoxysilan, N-(2-Aminoethyl)-3-aminopropyltrimethoxysilan, 3-Glycidylpropyltrimethoxysilan, Vinyltrimethoxysilan, Vinyltriethoxysilan oder 3-Methacryloxypropyltriethoxysilan eingesetzt werden.

Ferner können die erfindungsgemäßen Beschichtungsmittel ein oder mehrere nicht-ionische und/oder ionische Gleitmittel enthalten, wie Polyalkylenglykolether von Fettalkoholen oder Fettaminen, Polyalkylenglykolether und Glycerinester von Fettsäuren mit 12 bis 18 Kohlenstoffatomen, Polyalkylenglykole, höhere Fettsäureamide mit 12 bis 18 Kohlenstoffatomen von Polyalkylenglykolen und/oder Alkylenaminen, quartäre Stickstoffverbindungen, z.B. ethoxylierte Imidazoliniumsalze, Mineralöle oder Wachse

Die erfindungsgemäßen Beschichtungsmittel können auch ein oder mehrere Antistatika enthalten. Beispielweise sind zu nennen Lithiumchlorid, Ammoniumchlorid, Cr-III-Salze, organische Titanverbindungen, Arylalkylsulfate- oder Sulfonate, Arylpolyglykolethersulfonate oder quartäre Stickstoffverbindungen.

Die Herstellung der Beschichtungsmittel kann nach den an sich bekannten Methoden erfolgen. Bevorzugt wird in einem geeigneten Mischbehälter Wasser vorgelegt und unter Rühren das Bindemittel, der Härter und anschließend das Gleitmittel und gegebenenfalls weitere Hilfsmittel zugesetzt. Danach wird der pH-Wert auf 5 - 7 eingestellt und ein Hydrolysat eines Haftvermittlers zugesetzt. Nach einer weiteren Rührzeit von 15 Minuten ist das Beschichtungsmittel gebrauchsfertig und kann gegebenenfalls nach pH-Wert Anpassung appliziert werden.

Die Beschichtungsmittel, bevorzugt eingesetzt als Schlichtenzusammensetzungen, können über beliebige Methoden, beispielsweise mittels Sprüh- oder Walzapplikatoren auf ein geeignetes Substrat appliziert und ausgehärtet werden.

Für die beschlichteten Glasfasern sind sowohl die für die Glasseidenfabrikation verwendeten, bekannten Glastypen wie E-, A-, C-, und S- Glas nach DIN 1259-1 als auch die anderen an sich bekannten Erzeugnisse der Glasfaserhersteller geeignet. Unter den genannten Glastypen für die Herstellung von Endlosglasfasern besitzen die E-Glasfasern aufgrund ihrer Alkalifreiheit, hohen Zugfestigkeit und hohen Elastizitätsmodul die größte Bedeutung für die Verstärkung von Kunststoffen.

Das Verfahren zur Herstellung, das Verfahren der Beschlichtung und die Nachbearbeitung der Glasfasern ist bekannt und beispielsweise in K.L. Loewenstein "The Manufacturing Technology of Continous Glass Fibres", Elsevier Scientific Publishing Corp., Amsterdam, London, New York, 1983, beschrieben.

### Beispiele

*Leitfähigkeitsmessung:* Die Messung der Leitfähigkeit der Dispersionen erfolgt mit einem Konduktometer der Firma Knick, Typ 703.

*Bestimmung der Koagulationstemperatur:* Hierzu werden 50 mL der Dispersion in einen mit Rührer versehenen Kolben gebracht und mit einer Geschwindigkeit von 2 °C / min. unter Rühren aufgeheizt. Es ist die Temperatur angegeben, bei der es zu einer Gelierung der Dispersion kommt.

### Eingesetze Materialien:

| | |
|---|---|
| Impranil^{®} DLU: | anionische/nichtionische, aliphatische Polycarbonatpolyetherpoly- urethan-Dispersion mit einem Feststoffgehalt von 60% (Bayer Ma- terialscience AG, DE). |
| Impranil^{®} DLS: | anionische/nichtionische, aliphatische Polycarbonatpolyetherpoly- urethan-Dispersion mit einem Feststoffgehalt von 50% (Bayer Ma- terialscience AG, DE). |
| Impranil^{®} DLN | anionische, aliphatische Polyesterpolyurethan-Dispersion mit ei- nem Feststoffgehalt von 50% (Bayer Materialscience AG, DE). |
| Desmodur^{®} H: | 1,6-Hexamethylendiisocyanat (HDI), (Bayer Materialscience AG, DE) |
| Desmophen^{®} PE 170 HN: | Polyester aus Adipinsäure, Hexandiol und Neopentylglycol, OHZ 66, Mₙ = 1700 g·mol⁻¹ (Bayer Materialscience AG, Leverkusen) |
| Polyether LB 25 | Monofunktioneller Polyether auf Ethylenoxid/Propylenoxid-Basis mit einem Ethylenoxidanteil von 84%, OHZ 25, Mₙ = 2250 g·mol⁻¹ (Bayer Materialscience AG, DE) |
| MPEG2000 | Polyethylenglykolmonomethylether, CAS-Nr.: 9004-74-4, mono- funktionell, mit einer Molmasse von 2000 g·mol⁻¹ (Fluka) |
| MPEG1000 | Polyethylenglykolmonomethylether, CAS-Nr. 9004-74-4, mono- funktionell, mit einer Molmasse von 1000 g·mol⁻¹ (Fluka) |
| MPEG550 | Poly(ethylenglykol)methylether, CAS-Nr. 9004-74-4, monofunkti- onell, mit einer Molmasse von 550 g·mol⁻¹ (Fluka) |
| PEG2000 | Polyethylenglykol, CAS-Nr. 25322-68-3, difunktionell, mit einer Molmasse von 2000 g·mol⁻¹ (Sigma-Aldrich) |
| Tegomer^{®} D3403 | Polyethylenglykol (seitenständig), difunktionell, mit einer Mol- masse von 1200 g·mol⁻¹ (Tego Chemie Service GmbH, Essen) |
| IPDA | 1-Amino-3,3,5-trimethyl-5-aminomethyl-cyclohexan, Isophorondi- amin (Bayer Materialscience AG, DE) |
| HyHy | Hydrazin, H₂N-NH₂ (Bayer Materialscience AG, DE) |
| BDO | 1,4-Butandiol (Bayer Materialscience AG, DE) |

### Herstellung der Dispersionen:

### Beispiel 1 (erfindungsgemäß):

209. g des Polyesterpolyols PE 170 HN und 75 g des monofunktionellen Hydrophilierungsmittels LB25 werden mit 68 g HDI bei 50 °C versetzt und anschließend bei 100 °C zum Präpolymer umgesetzt bis der theoretische NCO-Wert (NCO-1 = 6,43%) erreicht ist. Danach werden 7,6 g Butandiol zugegeben und solange bei 50 °C weitergerührt bis der NCO-Wert konstant ist (NCO-2). Daraufhin werden 641 g Aceton zugeführt und auf 40 °C abgekühlt. Innerhalb von 20 min. werden 520 g Wasser zur Dispergierung unter starkem Rühren zugetropft. Basierend auf NCO-2 wird eine Mischung von Hydrazinhydrat und IPDA in 177 g Wasser zur Kettenverlängerung innerhalb von 5 min. zugegeben, so dass 46% der verbliebenen NCO Gruppen durch das Hydrazinhydrat und 45% durch das IPDA zur Reaktion gebracht werden. Die Mischung wird dabei 5 min. nachgerührt. Anschließend wird das Aceton bei 120 mbar bei 40 °C abdestilliert. Es entsteht eine wässrige Dispersion eines Feststoffgehalts von 34,7% und mit einer Viskostät von 537 mPas, einem pH-Wert von 5,8 und einer mittleren Teilchengröße von 580 nm.

### Beispiel 2 (erfindungsgemäß):

211 g des Polyesterpolyols PE 170 HN und 76,4 g des monfunktionellen Hydrophilierungsmittels MPEG2000 werden mit 70,6 g HDI bei 50 °C versetzt und anschließend bei 100 °C zum Präpolymer umgesetzt bis der theoretische NCO-Wert (NCO-1 = 6,50%) erreicht ist. Danach werden 7,8 g Butandiol zugegeben und solange bei 50 °C weitergerührt bis der NCO-Wert konstant ist (NCO-2). Daraufhin werden 650,1 g Aceton zugeführt und auf 40 °C abgekühlt. Innerhalb von 20 min. werden 526 g Wasser zur Dispergierung unter starkem Rühren zugetropft. Basierend auf NCO-2 wird eine Mischung von Hydrazinhydrat und IPDA in 181 g Wasser zur Kettenverlängerung innerhalb von 5 min. zugegeben, so dass 46% der verbliebenen NCO Gruppen durch das Hydrazinhydrat und 45% durch das IPDA zur Reaktion gebracht werden. Die Mischung wird dabei 5 min. nachgerührt. Anschließend wird das Aceton bei 120 mbar bei 40 °C abdestilliert. Es entsteht eine wässrige Dispersion eines Feststoffgehalts von 36,0% und mit einer Viskostät von 560 mPas, einem pH-Wert von 5,7 und einer mittleren Teilchengröße von 102 nm.

### Beispiel 3 (erfindungsgemäß):

214,4 g des Polyesterpolyols PE 170 HN und 72,4 g des monofunktionellen Hydrophilierungsmittels LB25 werden mit 70,4 g HDI bei 50 °C versetzt und anschließend bei 100 °C zum Präpolymer umgesetzt bis der theoretische NCO-Wert (NCO-1 = 6,51%) erreicht ist. Danach werden 7,8 g Butandiol zugegeben und solange bei 50 °C weitergerührt bis der NCO-Wert konstant ist (NCO-2). Daraufhin werden 649 g Aceton zugeführt und auf 40 °C abgekühlt. Innerhalb von 20 min. werden 524 g Wasser zur Dispergierung unter starkem Rühren zugetropft. Basierend auf NCO-2 wird eine Mischung von Hydrazinhydrat und IPDA in 181 g Wasser zur Kettenverlängerung innerhalb von 5 min. zugegeben, so dass 46% der verbliebenen NCO Gruppen durch das Hydrazinhydrat und 45% durch das IPDA zur Reaktion gebracht werden. Die Mischung wird dabei 5 min. nachgerührt. Anschließend wird das Aceton bei 120 mbar bei 40 °C abdestilliert. Es entsteht eine wässrige Dispersion eines Feststoffgehalts von 34,9% und mit einer Viskostät von 423 mPas , einem pH-Wert von 6,0 und einer mittleren Teilchengröße von 650 nm.

### Beispiel 4 (Verpleichsbeispiel):

214 g des Polyesterpolyols PE 170 HN und 63,1 g des monfunktionellen Hydrophilierungsmittels LB25 werden mit 70,0 g bei 50 °C versetzt und anschließend zum Präpolymer umgesetzt bis der theoretische NCO-Wert (NCO-1 = 6,69%) erreicht ist. Danach werden 7,8 g Butandiol zugegeben und solange bei 50 °C weitergerührt bis der NCO-Wert konstant ist (NCO-2). Daraufhin werden 632 g Aceton zugeführt und auf 40 °C abgekühlt. Innerhalb von 20 min. werden 507 g Wasser zur Dispergierung unter starkem Rühren zugetropft. Basierend auf NCO-2 wird eine Mischung von Hydrazinhydrat und IPDA in 181 g Wasser zur Kettenverlängerung innerhalb von 5 min. zugegeben, so dass 46% der verbliebenen NCO-Gruppen durch das Hydrazinhydrat und 45% durch das IPDA zur Reaktion gebracht werden. Die Mischung wird dabei 5 min. nachgerührt. Anschließend wird das Aceton bei 120 mbar bei 40 °C abdestilliert. Es entsteht eine wässrige Dispersion eines Feststoffgehalts von 33,1% und mit einer Viskostät von 395 mPas, einem pH-Wert von 6,2 und einer mittleren Teilchengröße von 880 nm.

### Beispiel 5 (Vergleichsbeispiel):

225,1 g des Polyesterpolyols PE 170 HN und 57,0 g des monfunktionellen Hydrophilierungsmittels LB25 werden mit 73,2 g HDI bei 50 °C versetzt und anschließend bei 100 °C zum Präpolymer umgesetzt bis der theoretische NCO-Wert (NCO-1 = 6,87%) erreicht ist. Danach werden 8,2 g Butandiol zugegeben und solange bei 50 °C weitergerührt bis der NCO-Wert konstant ist (NCO-2). Daraufhin werden 646 g Aceton zugeführt und auf 40 °C abgekühlt. Innerhalb von 20 min. werden 514 g Wasser zur Dispergierung unter starkem Rühren zugetropft. Basierend auf NCO-2 wird eine Mischung von Hydrazinhydrat und IPDA in 190 g Wasser zur Kettenverlängerung innerhalb von 5 min. zugegeben, so dass 46% der verbliebenen NCO Gruppen durch das Hydrazinhydrat und 45% durch das IPDA zur Reaktion gebracht werden. Die Mischung wird dabei 5 min. nachgerührt. Anschließend wird das Aceton bei 120 mbar bei 40 °C abdestilliert. Es entsteht eine wässrige Dispersion eines Feststoffgehalts von 37,2% und mit einer Viskostät von 96 mPas, einem pH-Wert von 5,8 und einer mittleren Teilchengröße von 1800 nm, die stark zur Sedimentation neigt.

### Beispiel 6 (Vergleichsbeispiel):

193,5 g des Polyesterpolyols PE 170 HN und 73,1 g des monofunktionellen Hydrophilierungsmittels MPEG1000 werden mit 74,2 g HDI bei 50 °C versetzt und anschließend bei 100 °C zum Präpolymer umgesetzt bis der theoretische NCO-Wert (NCO-1 = 7,17%) erreicht ist. Danach werden 8,2 g Butandiol zugegeben und solange bei 50 °C weitergerührt bis der NCO-Wert konstant ist (NCO-2). Daraufhin werden 620 g Aceton zugeführt und auf 40 °C abgekühlt. Innerhalb von 20 min. werden 487 g Wasser zur Dispergierung unter starkem Rühren zugetropft. Basierend auf NCO-2 wird eine Mischung von Hydrazinhydrat und IPDA in 190 g Wasser zur Kettenverlängerung innerhalb von 5 min. zugegeben, so dass 46% der verbliebenen NCO Gruppen durch das Hydrazinhydrat und 45% durch das IPDA zur Reaktion gebracht werden. Die Mischung wird dabei 5 min. nachgerührt. Anschließend wird das Aceton bei 120 mbar bei 40 °C abdestilliert. Es entsteht eine wässrige Dispersion eines Feststoffgehalts von 32,3% und mit einer Viskostät von 71 mPas, einem pH-Wert von 7,1 und einer mittleren Teilchengröße von 230 nm.

### Beispiel 7 (Vereleichsbeispiel):

202,7 g des Polyesterpolyols PE 170 HN und 76,6 g des bifunktionellen Hydrophilierungsmittels PEG2000 werden mit 77,6 g HDI bei 50 °C versetzt und anschließend bei 100 °C zum Präpolymer umgesetzt bis der theoretische NCO-Wert (NCO-1 = 7,17%) erreicht ist. Danach werden 8,6 g Butandiol zugegeben und solange bei 50 °C weitergerührt bis der NCO-Wert konstant ist (NCO-2). Daraufhin werden 645 g Aceton zugeführt und auf 40 °C abgekühlt. Innerhalb von 20 min. werden 510 g Wasser zur Dispergierung unter starkem Rühren zugetropft. Basierend auf NCO-2 wird eine Mischung von Hydrazinhydrat und IPDA in 199 g Wasser zur Kettenverlängerung innerhalb von 5 min. zugegeben, so dass 46% der verbliebenen NCO Gruppen durch das Hydrazinhydrat und 45% durch das IPDA zur Reaktion gebracht werden. Die Mischung wird dabei 5 min. nachgeführt. Anschließend wird das Aceton bei 120 mbar bei 40 °C abdestilliert. Es wird eine schon teilweise koagulierte Dispersion erhalten, die nicht näher charakteresiert wird.

### Beispiel 8 (Verpleichsbeispiel):

186,6 g des Polyesterpolyols PE 170 HN und 76,2 g des monofunktionellen Hydrophilierungsmittels MPEG550 werden mit 88,2 g HDI bei 50 °C versetzt und anschließend bei 100 °C zum Präpolymer umgesetzt bis der theoretische NCO-Wert (NCO-1 = 8,07%) erreicht ist. Danach werden 9,3 g Butandiol zugegeben und solange bei 50 °C weitergerührt bis der NCO-Wert konstant ist (NCO-2). Daraufhin werden 641 g Aceton zugeführt und auf 40 °C abgekühlt. Innerhalb von 20 min. werden 478 g Wasser zur Dispergierung unter starkem Rühren zugetropft. Basierend auf NCO-2 wird eine Mischung von Hydrazinhydrat und IPDA in 227 g Wasser zur Kettenverlängerung innerhalb von 5 min. zugegeben, so dass 46% der verbliebenen NCO Gruppen durch das Hydrazinhydrat und 45% durch das IPDA zur Reaktion gebracht werden. Die Mischung wird dabei 5 min. nachgerührt. Anschließend wird das Aceton bei 120 mbar bei 40 °C abdestilliert. Es entsteht eine wässrige Dispersion eines Feststoffgehalts von 29,7% und mit einer Viskostät von 107 mPas, einem pH-Wert von 5,5 und einer mittleren Teilchengröße von 99 nm.

### Beispiel 9 (Vergleichsbeispiel):

186 g des Polyesterpolyols PE 170 HN und 74,9 g des bifunktionellen Hydrophilierungsmittels Tegomer D3403 werden mit 84,7 g HDI bei 50 °C versetzt und anschließend bei 100 °C zum Präpolymer umgesetzt bis der theoretische NCO-Wert (NCO-1 = 8,07%) erreicht ist. Danach werden 9,3 g Butandiol zugegeben und solange bei 50 °C weitergerührt bis der NCO-Wert konstant ist (NCO-2). Daraufhin werden 631 g Aceton zugeführt und auf 40 °C abgekühlt. Innerhalb von 20 min. werden 475 g Wasser zur Dispergierung unter starkem Rühren zugetropft. Basierend auf NCO-2 wird eine Mischung von Hydrazinhydrat und IPDA in 218 g Wasser zur Kettenverlängerung innerhalb von 5 min. zugegeben, so dass 46% der verbliebenen NCO Gruppen durch das Hydrazinhydrat und 45% durch das IPDA zur Reaktion gebracht werden. Die Mischung wird dabei 5 min. nachgerührt. Anschließend wird das Aceton bei 120 mbar bei 40 °C abdestilliert. Es entsteht eine wässrige Dispersion eines Feststoffgehalts von 34,9% und mit einer Viskostät von 320 mPas, einem pH-Wert von 5,4 und einer mittleren Teilchengröße von 277 nm.

### Tabellen mit Ergebnissen

**Tabelle 1: Übersicht der verwendeten bzw. hergestellten wässrigen Polyurethandispersionen**

| Versuch | Stabilisierung | Hydrophilierung | Konz./ Gew-% | Funkt. | Molmasse |
|---|---|---|---|---|---|
| Impranil^{®} DLN* | Anionisch | x | x | x | x |
| Impranil^{®} DLS* | Anionisch / nichtionisch | x | x | x | x |
| Impranil^{®} DLU* | Anionisch / nichtionisch | x | x | x | x |
| 1 | nichtionisch | LB25 | 20 | 1 | 2250 |
| 2 | nichtionisch | MPEG | 20 | 1 | 2000 |
| 3 | nichtionisch | LB25 | 19 | 1 | 2250 |
| 4* | nichtionisch | LB25 | 17 | 1 | 2250 |
| 5* | nichtionisch | LB25 | 15 | 1 | 2250 |
| 6* | nichtionisch | MPEG | 20 | 1 | 1000 |
| 7* | nichtionisch | PEG | 20 | 2 | 2000 |
| 8* | nichtionisch | MPEG | 20 | 1 | 550 |
| 9* | nichtionisch | D3403 | 20 | 2 | 1200 |

| | | | | | |
|---|---|---|---|---|---|
| * Vergleichsbeispiele | | | | | |

**Tabelle 2: Ermittelte Koagulationstemperaturen und Leitfähigkeiten der Polyurethandispersionen**

| Versuch | Koag.-Temp. /°C | Leitfähigkeit / µS/cm |
|---|---|---|
| Impranil^{®} DLN* | > 80 | 1702 |
| Impranil^{®} DLS* | > 75 | 620 |
| ImpraniL^{®} DLU* | > 75 | 855 |
| 1 | > 75 | 150 |
| 2 | > 75 | 107 |
| 3 | > 75 | 87 |
| 4* | 68 | 91 |
| 5* | 62 | 105 |
| 6* | 72 | 136 |
| 7* | Keine Dispersion | Keine Dispersion |
| 8* | 52 | 112 |
| 9* | 67 | 96 |

| | | |
|---|---|---|
| * Vergleichsbeispiele | | |

Es ist deutlich erkennbar, dass die erfindungsgemäßen Dispersionen eine Koagulationstemperatur > 75 °C bei gleichzeitiger niedriger Leitfähigkeit aufweisen.

## Patentansprüche

1. Wässrige Polyurethanharnstoff-Dispersionen enthaltend die Aufbaukomponenten
A) 10 bis 40 Gew.% einer oder mehrerer aliphatischer Polyisocyanatverbindungen,
B) 40 bis 70 Gew.-% mindestens einer Polyhydroxyverbindung einer Molmasse Mₙ von 400 bis 8000 g/mol,
C) 19 bis 50 Gew.% einer gegenüber Isocyanatgruppen reaktiven, monofunktionellen Polyethylenglykol-haltigen Komponente, deren Anteil an Polyethylenglykol mindestens 50 Gew.% beträgt und eine Molmasse Mₙ von 1200 g/mol bis 3000 g/mol aufweist,
D) 0,5 bis 10 Gew.-% mindestens einer Amin verbindung einer Molmasse Mₙ von 32 bis 400 g/mol und einer Funktionalität ≥ 1,
E) 0,5 bis 10 Ges.-% einer Hydroxy verbindung einer Molmasse Mn von 62 bis 320 g/mol und einer Funktionalität > 1 sowie
F) gegebenenfalls 0 bis 10 Gew.% weiterer Hilfs- und Zusatzstoffe,
wobei die Summe der Aufbaukomponenten von A) bis F) immer 100 Gew.-% ergibt.

2. Wässrige Polyurethanharnstoff-Dispersionen gemäß Anspruch 1, **dadurch gekennzeichnet, dass** die Komponente C) Polyoxyalkylenether sind, die nur eine Hydroxy- oder Aminogruppe enthalten.

3. Wässrige Polyurethanharnstoff-Dispersionen gemäß Anspruch 1, **dadurch gekennzeichnet, dass** die Komponente C) Polyoxyalkylenether sind, die einen Anteil von 50 Gew.% bis 100 Gew.-% an Bausteinen, die vom Ethylenoxid abgeleitet sind, enthalten.

4. Wässrige Polyurethanharnstoff-Dispersionen gemäß Anspruch 1, **dadurch gekennzeichnet, dass** die Komponente C) Polyoxyalkylenether sind, die eine Molmasse Mₙ von 1500 g/mol bis 3000 g/mol aufweisen.

5. Wässrige Polyurethanharnstoff-Dispersionen gemäß Anspruch 1, **dadurch gekennzeichnet, dass** die Komponente D) eine Verbindung ist ausgewählt aus der Gruppe Diethanolamin, Hydrazin, Isophorondiamin (IPDA) und/oder Ethylendiamin.

6. Wässrige Polyurethanharnstoff-Dispersionen gemäß Anspruch 1, **dadurch gekennzeichnet, dass** die Komponente D) zwei Verbindungen sind ausgewählt aus der Gruppe Diethanolamin, Hydrazin, Isophorondiamin (IPDA) und/oder Ethylendiamin

7. Wässrige Polyurethanharnstoff-Dispersionen gemäß Anspruch 1, **dadurch gekennzeichnet, dass** die Komponente D) eine Mischung aus Hydrazinhydrat und IPDA ist.

8. Verwendung der Polyurethanpolyharnstoff-Dispersionen gemäß Anspruch 1 zur Herstellung von Beschichtungsmitteln.

9. Verwendung der Polyurethanpolyharnstoff-Dispersionen gemäß Anspruch 1 zur Herstellung von Glasfaserschlichten.

10. Wässrige Beschichtungsmittel enthaltend wässrige Polyurethanpolyharnstoff-Dispersionen gemäß Anspruch 1 sowie einen Vernetzer, ausgewählt aus der Gruppe der wasserdispergierbaren oder wasserlöslichen blockierten Polyisocyanate.

## Claims

1. Aqueous polyurethaneurea dispersions comprising the synthesis components
A) 10% to 40% by weight of one or more aliphatic polyisocyanate compounds,
B) 40% to 70% by weight of at least one polyhydroxy compound with a molar mass Mₙ of 400 to 8000 g/mol,
C) 19% to 50% by weight of a monofunctional, polyethylene glycol-containing component which is reactive towards isocyanate groups and has a polyethylene glycol fraction of at least 50% by weight and a molar mass Mₙ of 1200 g/mol to 3000 g/mol,
D) 0.5% to 10% by weight of at least one amine compound with a molar mass Mₙ of 32 to 400 g/mol and a functionality ≥ 1,
E) 0.5% to 10% by weight of a hydroxy compound with a molar mass Mₙ of 62 to 320 g/mol and a functionality ≥ 1, and
F) optionally 0% to 10% by weight of further auxiliaries and additives,
the sum of the synthesis components from A) to F) always making 100% by weight.

2. Aqueous polyurethaneurea dispersions according to Claim 1, **characterized in that** component C) are polyoxyalkylene ethers which contain only one hydroxy or amino group.

3. Aqueous polyurethaneurea dispersions according to Claim 1, **characterized in that** component C) are polyoxyalkylene ethers containing a fraction of 50% to 100% by weight of units derived from ethylene oxide.

4. Aqueous polyurethaneurea dispersions according to Claim 1, **characterized in that** component C) are polyoxyalkylene ethers which have a molar mass Mₙ of 1500 g/mol to 3000 g/mol.

5. Aqueous polyurethaneurea dispersions according to Claim 1, **characterized in that** component D) is a compound selected from the group of diethanolamine, hydrazine, isophoronediamine (IPDA) and/or ethylenediamine.

6. Aqueous polyurethaneurea dispersions according to Claim 1, **characterized in that** component D) are two compounds selected from the group of diethanolamine, hydrazine, isophoronediamine (IPDA) and/or ethylenediamine.

7. Aqueous polyurethaneurea dispersions according to Claim 1, **characterized in that that** component D) is a mixture of hydrazine hydrate and IPDA.

8. Use of the polyurethanepolyurea dispersions according to Claim 1 for preparing coating materials.

9. Use of the polyurethanepolyurea dispersions according to Claim 1 for preparing glass fibre sizes.

10. Aqueous coating materials comprising aqueous polyurethanepolyurea dispersions according to Claim 1 and also a crosslinker selected from the group of water-dispersible or water-soluble blocked polyisocyanates.

## Revendications

1. Dispersions aqueuses de polyuréthanne-urée, contenant les composants constitutifs
A) 10 à 40 % en poids d'un ou plusieurs composés polyisocyanate aliphatiques,
B) 40 à 70 % en poids d'au moins un composé polyhydroxylé ayant une masse moléculaire Mₙ de 400 à 8 000 g/mole,
C) 19 à 50 % en poids d'un composant monofonctionnel contenant du polyéthylèneglycol, réactif vis-à-vis de groupes isocyanate, dont le teneur en polyéthylèneglycol est d'au moins 50 % en poids et ayant une masse moléculaire Mₙ de 1 200 g/mole à 3 000 g/mole,
D) 0,5 à 10 % en poids d'au moins un composé de type amine ayant une masse moléculaire Mₙ de 32 à 400 g/mole et une fonctionnalité ≥ 1,
E) 0,5 à 10 % en poids d'au moins un composé hydroxylé ayant une masse moléculaire Mₙ de 62 à 320 g/mole et une fonctionnalité ≥ 1 ainsi que
F) éventuellement 0 à 10 % en poids d'autres adjuvants et additifs,
la somme des composants constitutifs de A) à F) étant toujours égale à 100 % en poids.

2. Dispersions aqueuses de polyuréthanne-urée selon la revendication 1, **caractérisées en ce que** les composants C) sont des polyoxyalkylène-éthers qui ne contiennent que des groupes hydroxy ou amino.

3. Dispersions aqueuses de polyuréthanne-urée selon la revendication 1, **caractérisées en ce que** les composants C) sont des polyoxyalkylène-éthers qui ont une teneur de 50 % en poids à 100 % en poids en constituants qui sont dérivés de l'oxyde d'éthylène.

4. Dispersions aqueuses de polyuréthanne-urée selon la revendication 1, **caractérisées en ce que** les composants C) sont des polyoxyalkylène-éthers qui ont une masse moléculaire Mₙ de 1 500 g/mole à 3 000 g/mole.

5. Dispersions aqueuses de polyuréthanne-urée selon la revendication 1, **caractérisées en ce que** le composant D) est un composé choisi dans le groupe constitué par la diéthanolamine, l'hydrazine, l'isophoronediamine (IPDA) et/ou l'éthylènediamine.

6. Dispersions aqueuses de polyuréthanne-urée selon la revendication 1, **caractérisées en ce que** le composant D) consiste en deux composés choisis dans le groupe constitué par la diéthanolamine, l'hydrazine, l'isophoronediamine (IPDA) et/ou l'éthylènediamine.

7. Dispersions aqueuses de polyuréthanne-urée selon la revendication 1, **caractérisées en ce que** le composant D) est un mélange d'hydrate d'hydrazine et d'IPDA.

8. Utilisation des dispersions de polyuréthanne-polyurée selon la revendication 1, pour la production de compositions de revêtement.

9. Utilisation des dispersions de polyuréthanne-polyurée selon la revendication 1, pour la production de colles pour fibres de verre.

10. Composition aqueuse de revêtement contenant des dispersions aqueuses de polyuréthanne-polyurée selon la revendication 1 ainsi qu'un agent de réticulation, choisi dans le groupe des polyisocyanates bloqués, solubles dans l'eau ou dispersables dans l'eau.
